# FASCICULE DE BREVET EUROPEEN

(11) **EP 0 863 043 B1**
(45) Date de publication et mention de la délivrance du brevet: **03.05.2000**
(21) Numéro de dépôt: 98102145.4
(22) Date de dépôt: 07.02.1998
(51) Int. Cl.: B60N 2/08

(54) **Glissière de siège de véhicule automobile**
Kraftfahrzeugsitzschiene
Slide for motor vehicle seat

(30) Priorité: 13.02.1997 FR 9701842
(43) Date de publication de la demande: 09.09.1998
(73) Titulaire: BERTRAND FAURE EQUIPEMENTS S.A., 92641 Boulogne Cedex (FR)
(72) Inventeur: Moradell, Pierre, 57000 Metz (FR); Timon, Michel, 57000 Metz (FR)
(74) Mandataire: Ballot, Paul Denis Jacques

(56) Documents cités:
- EP-A- 0 094 438
- EP-A- 0 408 932
- DE-A- 3 042 379
- DE-A- 3 935 359
- DE-C- 4 242 895
- FR-A- 2 736 311
- US-A- 4 712 759

## Description

La présente invention concerne une glissière de siège de véhicule automobile, et plus particulièrement le verrouillage en position d'une telle glissière.

De telles glissières, utilisées pour permettre le réglage en position longitudinale d'un siège, comportent classiquement un profilé fixe, solidarisé au plancher du véhicule, et un profilé mobile, solidarisé à l'armature d'assise du siège et coulissant longitudinalement par rapport au profilé fixe. Des moyens de verrouillage, classiquement liés au profilé mobile, permettent d'assurer le verrouillage du profilé mobile sur le profilé fixe, dans la position choisie par l'utilisateur, en s'engageant avec des crans d'au moins une rangée de crans aménagée sur le dit profilé fixe.

Le verrouillage ainsi assuré doit permettre une immobilisation fiable du siège par rapport au véhicule, notamment lors de chocs ou accidents qui pourraient tendre à déplacer le siège vers l'avant ou l'arrière.

On connaît déjà divers systèmes de glissières constitués d'un profilé mâle coulissant par rapport à un profilé femelle.

Selon un premier type de glissières, le profilé mâle constitue le profilé fixe, solidarisé au plancher, et le profilé femelle est solidaire de l'armature du siège. Le verrouillage est alors assuré par un verrou lié au profilé femelle dans la direction longitudinale de coulissement et déplaçable transversalement à cette direction au moyen d'organes de commande de déverrouillage. Le verrou comporte classiquement plusieurs dents qui viennent en prise avec des crans du profilé mâle et y sont maintenues par des moyens de rappel élastique pour assurer le verrouillage. Les organes de commande de déverrouillage permettent de dégager les dents du verrou hors des crans pour autoriser le coulissement du profilé femelle et donc le réglage du siège en position.

Dans un deuxième type de glissières, le profilé mâle est solidarisé à l'armature du siège et le profilé femelle est solidarisé au plancher. Le verrou est alors lié au profilé mâle et ses dents s'engagent avec des crans du profilé femelle.

Le document FR-A-2 736 311 décrit une glissière de ce dernier type dans laquelle le profilé femelle a une section de forme générale en U, comportant deux ailes qui se prolongent vers l'intérieur du profilé par des retours d'ailes internes, et le profilé mâle a également une section de forme général en U, dont les ailes sont situées entre les retours d'ailes internes du profilé femelle et se prolongent vers l'extérieur par des retours d'ailes externes qui sont repliés sous les dits retours d'ailes internes du profilé femelle, et s'étendent respectivement entre ces derniers et les ailes du profilé femelle.

Les retours d'ailes externes du profilé mâle forment, avec les ailes et retours d'ailes internes du profilé femelle, des chemins de roulement pour des billes facilitant le coulissement relatif des profilés mâle et femelle. Les moyens de verrouillage comportent un verrou constitué d'une lame élastiquement flexible, par exemple en acier à ressort, placée à l'intérieur de la glissière et fixée par une extrémité sur le profilé mâle. L'autre extrémité de cette lame comporte, de chaque côté, des dents de verrouillage qui sont guidées, transversalement à la direction de coulissement, dans des découpes réalisées dans les angles formés par des ailes et retours d'ailes externes du profilé mâle, et qui s'engagent, en position de verrouillage, avec des crans de deux rangées de crans aménagées respectivement sur les bords des retours d'ailes internes du profilé femelle. Le déverrouillage est assuré par une branche d'un palonnier de commande, qui pénètre dans la glissière et dont l'extrémité agit sur le verrou pour dégager les dents des crans en faisant fléchir la lame transversalement à la direction de coulissement, le retour en position de verrouillage étant assuré par le rappel élastique de la dite lame dès que le palonnier est relâché. Le verrouillage assuré par ce système est particulièrement résistant aux efforts tendant à faire coulisser le profilé mâle, grâce notamment au fait que les rangées de crans du profilé femelle sont situées directement contre la paroi du profilé mâle dans laquelle sont réalisées les découpes de guidage des dents, et que, de ce fait, les dits efforts se traduisent essentiellement par des contraintes de cisaillement des dents, à l'exclusion de toute autre contrainte sur le verrou lui-même ou sa fixation.

Le principe de ce système de verrouillage, consistant à transformer les efforts de déplacement relatif des deux profilés d'une glissière en contraintes de cisaillement des dents du verrou, peut s'appliquer à d'autres types de glissières que celles décrites dans le document précité, en particulier à des glissières du premier type mentionné ci-dessus.

Toutefois, lors d'un accident, il est possible que le verrou se déplace vers la position de déverrouillage sous l'effet d'un choc, et le siège risque alors de coulisser.

La présente invention a pour but de résoudre ce problème et vise particulièrement à assurer, en plus de la forte résistance du verrouillage mentionné ci-dessus, une grande fiabilité et une amélioration de la sécurité, en empêchant tout déverrouillage intempestif.

Avec ces objectifs en vue, l'invention a pour but une glissière de siège de véhicule automobile, du type comportant un profilé fixe, destiné à être fixé sur le plancher du véhicule, et un profilé mobile, destiné à être fixé sur le siège et pouvant coulisser longitudinalement par rapport au profilé fixe, et des moyens de verrouillage pour empêcher ce coulissement, le profilé fixe comportant un bord pourvu d'une rangée de crans de verrouillage situé à proximité directe d'une paroi latérale du profilé mobile, les moyens de verrouillage comportant un verrou lié au profilé mobile et déplaçable, dans une direction parallèle à la dite paroi et transversale à la direction de coulissement, entre une position de verrouillage et une position déverrouillée, le dit verrou étant pourvu de dents qui traversent la dite paroi latérale du profilé mobile en passant dans des découpes respectives aménagées dans la dite paroi, les dents étant guidées dans les découpes lors des déplacements du verrou et s'engageant, dans la position de verrouillage, avec des crans de la dite rangée de crans.

Selon l'invention, cette glissière est caractérisée en ce que la dite paroi latérale comporte des moyens de butée, situés sur les cotés des dites découpes et en face du bord du profilé fixe, qui comporte les crans de verrouillage dans lesquels s'engagent les extrémités des dents, et en ce que les dimensions et la matière des dites dents sont déterminées de manière que, lors d'un effort de coulissement excédant une valeur prédéterminée, alors que le verrou est en position de verrouillage, les dents puissent se déformer en fléchissant dans la direction de coulissement, dans le sens opposé au sens de coulissement du profilé mobile, les extrémités des dents, ainsi déformées par l'effet du déplacement relatif des crans et des découpes dans lesquelles passent les dents (32), étant déplacées face aux dits moyens de butée, de manière à empêcher tout déplacement du verrou vers sa position déverrouillée.

Ainsi, lors d'un choc générant un important effort de déplacement horizontal du siège, et tendant donc à faire coulisser le profilé mobile sur le profilé fixe, le léger déplacement qui en résulte provoque une déformation plastique en flexion des dents du verrou. Il en résulte que la partie d'extrémité de chaque dent se trouve au moins partiellement décalée latéralement par rapport à la découpe, et donc située face aux moyens de butée. Les dents, ainsi retenues par ces moyens de butée, assurent un auto-blocage du verrou empêchant tout déplacement du verrou vers sa position de déverrouillage. Bien évidemment, la hauteur des dents devra être déterminée, en fonction de la géométrie des profilés, de manière que, d'une part, la flexion des dents ne soit pas empêchée par les moyens de butée, c'est-à-dire que, en position verrouillée, les extrémités des dents soient décalées, dans la direction de déplacement du verrou, par rapport aux moyens de butée, et que, d'autre part, les dents restent bien en prise avec les crans, ce qui sera aisément assuré dès lors que la hauteur des dents sera supérieure au jeu entre le bord pourvu de crans du profilé fixe et les dits moyens de butée.

Dans le cas du système de verrouillage décrit dans le document FR-A 2 736 311 précité, le verrou est préférentiellement constitué d'une lame en acier à ressort, et les dents, découpées directement dans cette lame, présentent une grande résistance au cisaillement, mais ne sont donc pas, ou très peu, déformables. Par comparaison, selon l'invention, le matériau utilisé pour le verrou sera choisi de manière à permettre la déformation pré-mentionnée, par exemple un acier moins dur que l'acier à ressort. La résistance du verrouillage ne sera cependant pas réduite de manière sensible du fait que, même après déformation, les efforts se traduisent encore uniquement en contraintes de cisaillement, contraintes auxquelles même des aciers plus malléables que l'acier à ressort résistent très bien.

Préférentiellement, les moyens de butée sont formés par un repli de la paroi latérale, dans lequel les découpes se prolongent afin de permettre le retrait des dents hors des crans dans la position déverrouillée.

Selon une disposition préférentielle, le repli forme avec la paroi latérale un angle sensiblement droit, le bord du profilé fixe étant situé dans le dit angle, à proximité directe de la paroi et du repli, les dents étant situées au niveau du repli dans la position déverrouillée, et décalées par rapport au repli dans la position de verrouillage.

Selon une disposition particulière, le profilé fixe est un profilé femelle ayant une section de forme générale en U présentant deux ailes se prolongeant par des retours d'ailes internes repliés vers l'intérieur de la glissière, et les dits crans sont réalisés sur le bord d'au moins un des dits retours d'ailes internes, et le profilé mobile est un profilé mâle ayant également une section en forme de U dont les ailes comportent des retours d'ailes externes qui s'engagent sous les retours d'ailes internes du profilé femelle, au moins une des ailes du profilé mâle constituant la dite paroi latérale et le retour d'aile externe correspondant formant le dit repli, et le verrou est constitué par une plaque située à l'intérieur de la glissière. Préférentiellement, la plaque comporte des dents de chaque côté, et les découpes (25) et les rangées de crans (14) sont réalisées des deux côtés de la glissière. Ces dispositions présentent l'avantage de placer le verrou à l'intérieur de la glissière, où il se trouve donc protégé, et, de plus, améliorent la résistance en assurant le verrouillage des deux côtés de la glissière, ce qui à également pour effet de répartir les contraintes sur un nombre de dents plus élevé.

Dans le système de verrouillage décrit dans le document FR-A 2 736 311 précité, l'extrémité du verrou portant les dents, appelée également peigne, se déplace en fait selon une trajectoire sensiblement circulaire et le dit peigne peut ne pas se trouver positionné bien parallèlement à la rangée de crans en position de verrouillage. Il en résulte alors que certaines dents ne sont pas parfaitement engagées avec les crans correspondants du profilé fixe, ce qui nuirait à la sécurité assurée par l'auto-blocage mentionné préalablement.

Afin d'éviter ce problème, selon une autre disposition préférentielle de l'invention, le profilé mobile comporte des moyens de guidage pour guider le verrou dans une direction perpendiculaire à la direction de coulissement.

Ainsi, l'ensemble des dents du verrou s'étend toujours précisément parallèlement à la direction de coulissement et donc à la rangée de crans, garantissant un engagement de toutes les dents avec les crans du profilé fixe.

D'autres caractéristiques et avantages apparaîtront dans la description qui va être faite à titre d'exemple d'une glissière conforme à l'invention, et d'une variante de réalisation permettant d'assurer un réglage en position plus précis, avec un pas de réglage inférieur au pas des crans du profilé fixe.

On se reportera aux dessins annexés dans lesquels :
- la figure 1 est une vue partielle, en éclaté, de la glissière conforme à l'invention,
- la figure 2 est une vue en coupe transversale de la glissière, dans la position verrouillée,
- la figure 3 est une vue similaire à celle de la figure 2, en position de déverrouillage,

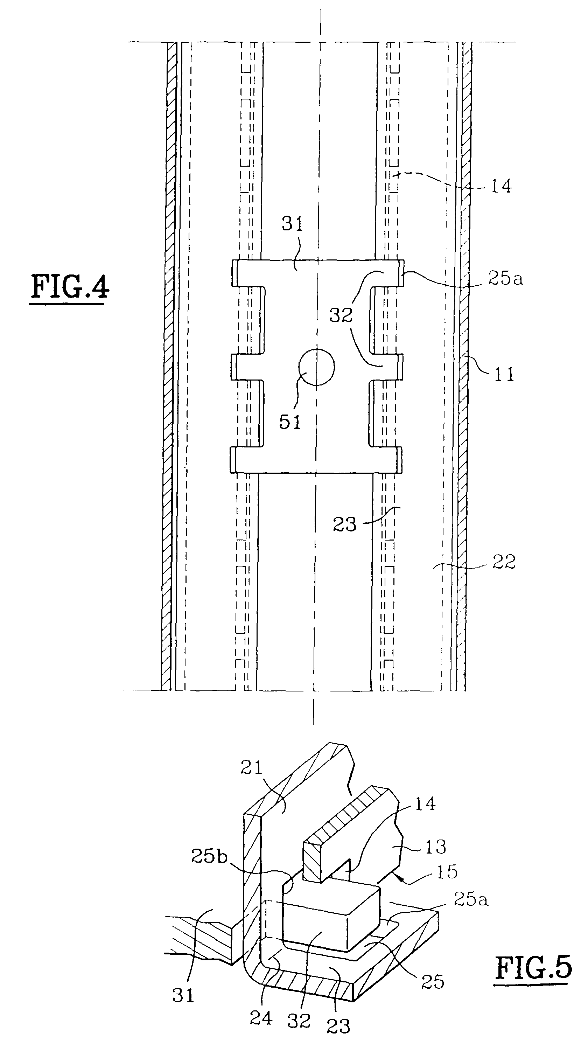

- la figure 4 est une vue de dessous, en coupe selon la ligne IV - IV de la figure 2, montrant le verrou dans son état normal de fonctionnement,
- la figure 5 est une vue de détail en perspective illustrant l'engagement d'une dent du verrou avec un cran du profilé femelle,
- les figures 6 et 7, correspondant respectivement aux figures 4 et 5, montrent l'état du verrou après un choc ayant provoqué une déformation des dents,
- la figure 8 est une vue de détail d'un système de verrouillage utilisant deux verrous montés en parallèle et mobiles indépendamment l'un de l'autre,
- la figure 9 est une vue similaire dans le cas de trois verrous,
- la figure 10 est une vue partielle en coupe selon un plan médian vertical d'une variante de réalisation utilisant le système à trois verrous de la figure 8, et adaptée pour réduire le pas de réglage,
- la figure 11 est une vue de dessus de la glissière représentée figure 10.

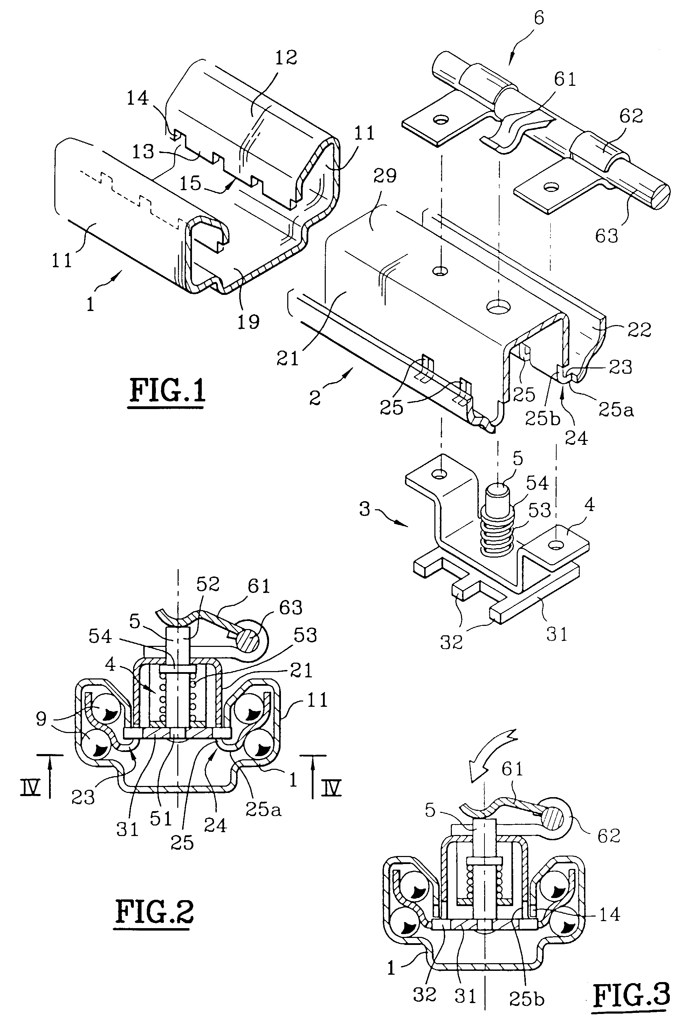

La glissière représentée figure 1 comporte un profilé femelle 1, destiné à être fixé sur le plancher, non représenté, d'un véhicule automobile, et un profilé mâle 2 destiné à être fixé sur l'armature d'assise, également non représentée, du siège.

Le profilé femelle 1, réalisé par exemple en tôle d'acier pliée, a une section de forme générale en U comportant deux ailes 11, constituant deux parois latérales sensiblement verticales, et un fond 19 horizontal. Les ailes 11 se prolongent à partir de leurs bords supérieurs par des retours d'ailes internes 12, orientés vers l'intérieur du U et dirigés vers le fond 19 du profilé femelle 1. Les bords longitudinaux 13 de ces retours d'ailes s'étendent verticalement, et une rangée de crans 14 est réalisée sur chacun de ces bords.

Le profilé mâle 2 a également une section générale en forme de U présentant deux ailes 21 s'étendant verticalement vers le bas à partir du fond 29, solidarisable, de manière connue en soi, sur l'armature du siège. Les ailes 21 se prolongent par des retours d'ailes externes 22, orientés vers le haut et situés, lorsque les profilés mâle et femelle sont assemblés comme on le voit figures 2 et 3, entre les ailes et retours d'ailes respectifs du profilé femelle 3. Les ailes et retours d'ailes des deux profilés sont conformés de manière à former des chemins de roulement pour des billes 9 facilitant le coulissement relatif des deux profilés. Les retours d'ailes internes 12 du profilé femelle sont par ailleurs conformés de manière que les bords 14 s'étendent contre les ailes 21 du profilé mâle, avec un jeu latéral minimal.

Chaque retour d'aile externe 22 du profilé mâle est relié à l'aile correspondante 21 du dit profilé mâle, par une zone de paroi constituée d'un repli 23 qui s'étend sensiblement à l'horizontal à partir du bord inférieur de l'aile 21, formant ainsi avec la paroi constituant la dite aile, un angle 24 sensiblement à 90°.

Le bord 13 du retour d'aile interne 12 s'étend vers le bas jusqu'à proximité directe du repli 23.

La glissière comporte aussi des moyens de verrouillage 3 qui comprennent un verrou constitué d'une plaque 31 ou peigne, portant de chaque côté une pluralité de dents 32. La plaque 31 s'étend horizontalement à l'intérieur de la glissière, entre les ailes 21 du profilé mâle 2 et ses dents 32 s'engagent dans des découpes respectives 25 réalisées dans le profilé mâle au niveau de l'angle 24. Une partie 25a de cette découpe est donc située dans le repli 23 et une autre partie 25b est située dans la paroi constituant l'aile 21 du profilé mâle.

Dans la position verrouillée, représentée figure 2, des dents 32 s'engagent également avec des crans 14 du profilé femelle, et sont situées au-dessus du repli 24, donc dégagées de la partie 25a de découpe réalisée dans le dit repli.

Dans la position déverrouillée, représentée figure 3, les dents 32 sont dégagées des crans 14 mais restent engagées dans les découpes 25.

Le verrou est mobile perpendiculairement à la direction longitudinale de la glissière, c'est-à-dire verticalement, entre la position verrouillée et la position déverrouillée, les dents restant guidées dans les découpes respectives avec un jeu fonctionnel minimal lors du déplacement du verrou 31.

Le déplacement du verrou est commandé par une tige de commande 5 s'étendant verticalement et sur l'extrémité inférieure 51 de laquelle la plaque 31 est fixée, par exemple par rivetage. La tige 5 est guidée axialement dans des moyens de guidage constitués par exemple par un étrier 4 placé à l'intérieur du profilé mâle 2 et fixé sur le fond 29 de ce dernier. La tige 5 coulisse dans un alésage réalisé dans la paroi de cet étrier et dans un autre alésage réalisé dans le fond 29 du profilé mâle. Elle comporte une collerette 54 qui sert d'appui pour un ressort 53 monté autour de la tige 5 entre la dite collerette 54 et l'étrier 4. Le ressort 53 assure le rappel élastique du verrou 31 dans la position verrouillée, et son maintien dans cette position en usage normal de la glissière. Les moyens de commande de déverrouillage 6 comprennent un levier 61 solidaire d'un arbre de commande 63 monté pivotant dans des paliers 62 fixés sur le fond 29 du profilé mâle, à l'extérieur de la glissière. Lors de l'utilisation courante, le déplacement vers le bas du verrou 31, pour déverrouiller la glissière, est commandé en faisant pivoter l'arbre de commande 63, par exemple par une poignée non représentée, ce qui provoque l'appui du levier 61 sur l'extrémité supérieure 52 de la tige 5 (voir figure 3). Après réglage en position de la glissière, le re-verrouillage s'effectue automatiquement, sous l'effet du ressort 53.

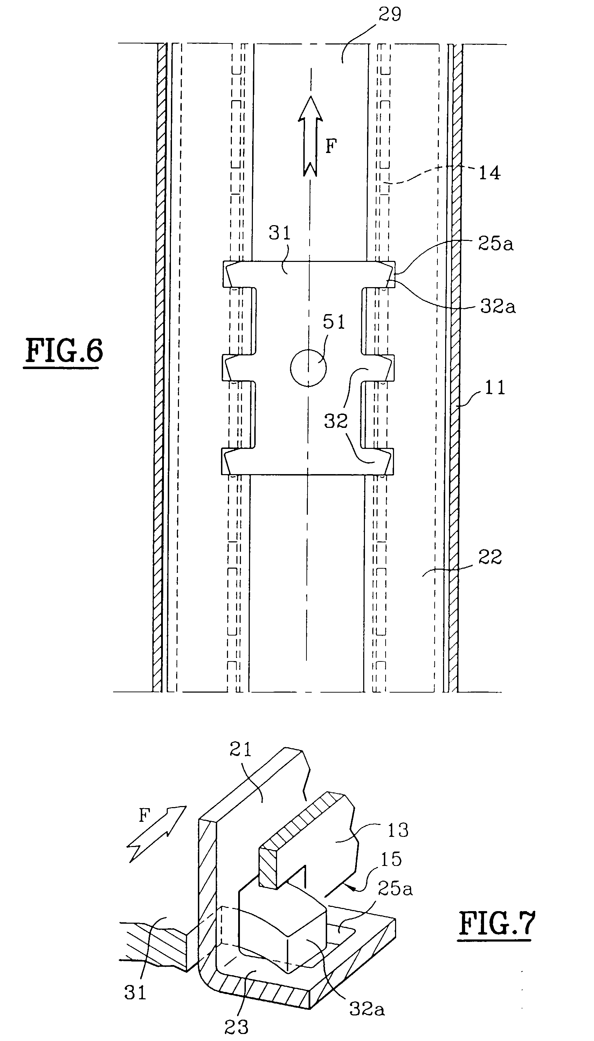

Les figures 6 et 7 illustrent la déformation des dents 32 du verrou lorsqu'une forte décélération du véhicule, par exemple en cas d'accident, tend à déplacer le siège et génère des efforts F importants sur le système de verrouillage. Les extrémités 32a des dents 32, en prise avec les crans 14 du profilé femelle sont alors déformées en flexion et se retrouvent alors au moins en partie au-dessus du repli 23. Il s'ensuit que le verrou ne peut plus se déplacer vers le bas, et donc tout déverrouillage intempestif est impossible dès que cette déformation des dents a eu lieu.

La matière et les dimensions des dents sont déterminées de manière que cette déformation se produise dès que l'effort subi atteint un seuil prédéterminé. Par ailleurs, la hauteur des dents est déterminée de manière que cette déformation puisse se produire lorsque le verrou est en position verrouillée, c'est-à-dire pratiquement que la hauteur des dents soit inférieure à la hauteur de la partie de découpe 25b située dans l'aile 21. La distance entre le chant 15 du bord 13 du profilé femelle et la face supérieure du repli 23 devra également être inférieure à la hauteur des dents.

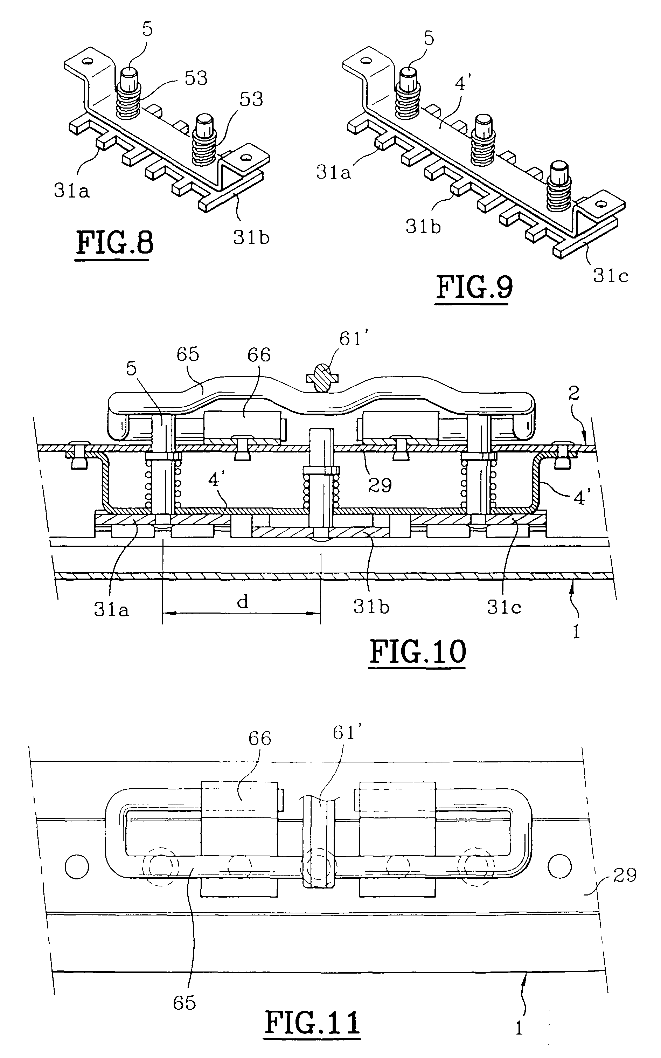

Les figures 8 à 11 illustrent une variante de réalisation de la glissière, utilisant plusieurs verrous 31a, 31b, 31c mobiles indépendamment l'un de l'autre.

Une telle disposition permet notamment de fournir une possibilité de réglage en position avec un pas de réglage inférieur au pas des crans 14 du profilé femelle. Le principe général de systèmes offrant une telle possibilité, connue sous l'appellation de "verrou différentiel", est déjà connu. Il est seulement rappelé ici qu'il consiste à utiliser plusieurs organes de verrouillage décalés, selon la direction longitudinale de la glissière d'une distance différente d'un multiple entier du pas des crans du profilé fixe, c'est à dire une distance égale à un multiple du pas des crans auquel est ajoutée une fraction de ce pas dépendante du nombre de verrous utilisés, soit une distance d = K * p + p * (n - 1)/n, , où k est un nombre entier, p est le pas des crans, et n est le nombre de verrous. Les systèmes de ce type fonctionnent de la manière suivante : partant d'une position de réglage dans laquelle un organe de verrouillage est en prise avec des crans du profilé fixe, et au moins un autre organe de verrouillage n'est pas en prise du fait du décalage mentionné ci-dessus, un déplacement du profilé mobile d'une distance inférieure au pas des crans suffit pour amener en concordance avec des crans, l'organe de verrouillage qui n'était pas en prise auparavant. Pour plus de renseignements sur la réalisation et le fonctionnement de tels systèmes de verrous différentiels, on pourra notamment se reporter aux documents EP-A-408 932, US-A-4 712 759 ou DE-A-4 242 895 ou encore à la demande de brevet français N° 95 13370.

Ce principe est donc mis en oeuvre dans la variante de réalisation représentée figures 10 et 11, utilisant trois verrous 31a, 31b et 31c. Chacun de ces verrous est monté sur le profilé mâle de manière similaire à ce qui a été décrit précédemment en relation avec les figures 1 à 3, en utilisant un seul étrier 4' pour assurer le guidage des tiges 5 supportant les verrous. Comme on le voit figure 10, le verrou 31a est en position haute, ses dents étant donc engagées avec des crans du profilé fixe, et le verrou 31b, qui est décalé par rapport au verrou 31a d'une distance d différente d'un multiple du pas des crans, est dans une position basse, du fait que ses dents ne peuvent s'engager avec des crans, comme on le comprendra aisément.

Les moyens de commande de déverrouillage sont ici constitués par une pièce en forme d'anneau 65 montée pivotante dans des paliers 66 fixés sur le profilé mobile 2. L'anneau est conformé de manière à pouvoir appuyer sur les trois tiges 5, lorsqu'un levier 61', ou autre organe de commande similaire, est actionné pour faire pivoter l'anneau vers le bas. Une telle action conduit donc à ce que tous les verrous sont en position déverrouillée. Le profilé mâle peut alors être déplacé d'une distance par exemple inférieure au pas des crans, dans laquelle le verrou 31b pourra alors s'engager avec les crans, alors que le verrou 31a restera en position basse.

Bien que la description qui précède ait été faite en relation avec un système de verrouillage utilisant trois verrous, on comprendra aisément qu'un fonctionnement similaire serait obtenu en utilisant un système à seulement deux verrous, tel que représenté figure 8, ou tout autre nombre de verrous.

L'invention n'est pas limitée aux dispositions et formes de glissières et verrous décrits ci-dessus uniquement à titre d'exemple. L'invention pourra s'appliquer à tout type de glissières présentant les caractéristiques définies dans le préambule de la revendication 1, c'est-à-dire notamment même dans le cas d'utilisation d'un verrou situé à l'extérieur de la glissière, ou encore dans le cas où le profilé mâle serait fixe et le profilé femelle mobile. Les adaptations requises pour chaque type de glissière et chaque type de verrou pourront être réalisées sans difficulté par l'homme du métier. Le système décrit dans le document FR-A-2736311 pourra également être aisément modifié conformément à l'invention, par exemple en remplaçant la partie portant les dents de la lame ressort par une pièce rapportée constituant un verrou conforme à l'invention, fixé sur l'extrémité de la dite lame.

## Revendications

1. Glissière de siège de véhicule automobile comportant un profilé fixe (1), destiné à être fixé sur le plancher du véhicule, et un profilé mobile (2), destiné à être fixé sur le siège et pouvant coulisser longitudinalement par rapport au profile fixe, et des moyens de verrouillage (3) pour empêcher ce coulissement, le profilé fixe (1) comportant un bord (13) pourvu d'une rangée de crans de verrouillage (14) situé à proximité directe d'une paroi latérale (21) du profilé mobile, les moyens de verrouillage (3) comportant un verrou (31) lié au profilé mobile (2) et déplaçable, dans une direction parallèle à la dite paroi (21) et transversale à la direction de coulissement, entre une position de verrouillage et une position déverrouillée, le dit verrou (31) étant pourvu de dents (32) qui traversent la dite paroi latérale (21) du profilé mobile en passant dans des découpes respectives (25) aménagées dans la dite paroi, les dents (32) étant guidées dans les découpes (25) lors des déplacements du verrou (31) et s'engageant, dans la position de verrouillage, avec des crans de la dite rangée de crans (14) du profilé fixe (1),
caractérisée en ce que la dite paroi latérale (21) comporte des moyens de butée (23), situés sur les cotés des dites découpes (25) et en face du bord (13) du profilé fixe (1), qui comporte les crans de verrouillage (14) dans lesquels s'engagent les extrémités (32a) des dents (32), et en ce que les dimensions et la matière des dites dents (32) sont déterminées de manière que, lors d'un effort de coulissement F excédant une valeur prédéterminée, alors que le verrou (31) est en position de verrouillage, les dents (32) puissent se déformer en fléchissant dans la direction de coulissement, dans le sens opposé au sens de coulissement du profilé mobile (2), les extrémités (32a) des dents (32), ainsi déformées par l'effet du déplacement relatif des crans (14) et des découpes (25) dans lesquelles passent les dents (32), étant déplacées face aux dits moyens de butée (23) de manière à empêcher tout déplacement du verrou (31) vers sa position déverrouillée.

2. Glissière selon la revendication 1, caractérisée en ce que les moyens de butée (23) sont formés par un repli (23) de la paroi latérale (21) dans lequel les découpes (25) se prolongent (25a).

3. Glissière selon la revendication 2, caractérisée en ce que le repli (23) forme avec la paroi latérale (21) un angle (24) sensiblement droit, le bord (13) du profilé fixe (1) étant situé dans le dit angle (24), à proximité directe de la paroi (21) et du repli (23), les dents (32) du verrou (31) étant situées au niveau du repli (23) dans la position déverrouillée, et décalées par rapport au repli (23) dans la position de verrouillage.

4. Glissière selon l'une des revendications 1 à 3, caractérisée en ce que le profilé fixe est un profilé femelle (1) ayant une section de forme générale en U présentant deux ailes (11) se prolongeant par des retours d'ailes internes (12) repliés vers l'intérieur de la glissière, et les dits crans (14) sont réalisés sur le bord (13) d'au moins un des dits retours d'ailes internes (12), et le profilé mobile est un profilé mâle (2) ayant également une section en forme de U dont les ailes comportent des retours d'ailes externes (22) qui s'engagent sous les retours d'ailes internes (12) du profilé femelle (1), au moins une des ailes du profilé mâle (2) constituant la dite paroi (21) et le retour d'aile externe correspondant formant le dit repli (23), et le verrou est constitué par une plaque (31) située à l'intérieur de la glissière.

5. Glissière selon la revendication 4, caractérisée en ce que la plaque (31) comporte des dents (32) de chaque côté, et les découpes (25) et les rangées de crans (14) sont réalisées des deux côtés de la glissière.

6. Glissière selon l'une quelconque des revendications 1 à 5, caractérisée en ce que le profilé mobile (2) comporte des moyens de guidage (4) pour guider le verrou (31) dans une direction perpendiculaire à la direction de coulissement.

7. Glissière selon la revendication 6, caractérisée en ce que le verrou (31) est fixé sur une extrémité intérieure (51) d'une tige de commande (5) coulissant dans les dits moyens de guidage (4), l'extrémité extérieure (52) de la tige dépassant hors de la glissière.

8. Glissière selon la revendication 7, caractérisée en ce qu'elle comporte des moyens (53) de rappel élastique du verrou (31) dans la position verrouillée et des moyens (6) de commande de déverrouillage comportant un levier (61) monté pivotant dans des paliers (62) solidaires du profilé mobile (2) et agissant sur l'extrémité extérieure (52) de la tige de commande (5).

9. Glissière selon l'une quelconque des revendications 1 à 8, caractérisée en ce qu'elle comporte plusieurs verrous (31a, 31b, 31c) pouvant se déplacer indépendamment l'un de l'autre.

10. Glissière selon la revendication 9, caractérisée en ce que les dents (32) d'un verrou (31a) sont décalées longitudinalement par rapport à celles d'un autre verrou (31b) d'une distance égale à K * p + p * (n - 1)/n , K étant un nombre entier, p étant le pas des crans et n étant le nombre de verrous.

## Patentansprüche

1. Gleitschiene für Kraftfahrzeug, mit einem festen Profil (1), das dazu dient am Boden des Fahrzeugs befestigt zu werden, und einem beweglichen Profil (2), das dazu dient an dem Sitz befestigt zu werden und längs bezüglich des festen Profils gleiten kann, und mit Verriegelungseinrichtungen (3) zum Verhindern dieses Gleitens, wobei das feste Profil (1) einen Rand (13) aufweist, der mit einer Verriegelunskrampenreihe (14) versehen ist, der sich in unmittelbarer Nähe einer seitlichen Wand (21) des beweglichen Profils befindet, wobei die Verriegelungseinrichtungen (3) einen Riegel (31) aufweisen, der mit dem beweglichen Profil (2) verbunden und in einer Richtung parallel zur Seitenwand (21) und quer zur Gleitrichtung bewegbar ist, zwischen einer Verriegelungsposition und einer Entriegelungsposition, wobei der Riegel (31) mit Zähnen (32) versehen ist, die die Seitenwand (21) des beweglichen Profils durchqueren und durch entsprechende Ausschnitte (25) hindurchgehen, die in der Seitenwand ausgebildet sind, wobei die Zähne (32) in den Ausschnitten (25) bei den Bewegungen des Riegels (31) geführt sind und in der Verriegelungsstellung in Eingriff mit Krampen der Krampenreihe (14) des festen Profils (1) stehen,
dadurch gekennzeichnet, daß die Seitenwand (21) Anschlageinrichtungen (23) aufweist, die an den Seiten der Ausschnitte (45) und gegenüberliegend dem Rand (13) des festen Profils (1) angeordnet sind, das die Verriegelungskrampen (14) aufweist, in die die Enden (32a) der Zähne (32) eingreifen, und daß die Abmessungen und das Material dieser Zähne (32) derart bestimmt sind, daß bei einer Gleitkraft F, die einen vorbestimmten Wert übersteigt, während sich der Riegel (31) in Verriegelungsposition befindet, die Zähne (32) sich verformen können unter Umbiegen in die Gleitrichtung, in die der Gleitrichtung entgegengesetzte Richtung des beweglichen Profils (2), wobei die Enden (32a) der Zähne (32), die so durch den Effekt der relativen Bewegung der Krampen (14) und der Ausschnitte (25), in die die Zähne (32) hindurchgehen, verformt werden, gegenüber den Anschlageinrichtungen (23) derart bewegt werden, daß jegliche Bewegung des Riegels (31) in seine entriegelte Position verhindert wird.

2. Gleitschiene nach Anspruch 1, dadurch gekennzeichnet, daß die Anschlageinrichtungen (23) durch einen Umschlag (32) der seitlichen Wand (21) gebildet ist, in den sich die Ausschnitte (25) verlängern (25a).

3. Gleitschiene nach Anspruch 2, dadurch gekennzeichnet, daß der Umschlag (23) mit der seitlichen Seitenwand (21) einen im wesentlichen rechten Winkel (24) bildet, wobei der Rand (13) des festen Profils (1) in dem Winkel (24) angeordnet ist, in unmittelbarer Nähe zur Seitenwand (21) und des Umschlags (23), wobei die Zähne (32) des Riegels (31) auf der Höhe des Umschlags (23) in der entriegelten Position angeordnet sind und bezüglich des Umschlags (23) in die Entriegelungsposition versetzt sind.

4. Gleitschiene nach einem der Ansprüche 1 bis 3, dadurch gekennzeichnet, daß das feste Profil ein weibliches Profil (1) ist, das eine allgemeine U-Querschnittsform aufweist, mit zwei Flügeln (11), die sich durch Umkehrungen von inneren Flügeln (12) verlängern, die in das Innere der Gleitschiene umgebogen sind, und daß die Krampen (14) an dem Rand (13) von wenigstens einem der inneren Flügelumkehrungen (12) ausgebildet sind, und das bewegliche Profil ein männliches Profil (2) ist, das ebenfalls eine U-förmige Querschnittsform aufweist, dessen Flügel äußere Flügelumkehrungen (22) aufweisen, die unter die inneren Flügelumkehrungen (12) des weiblichen Profils (1) eingreifen, wobei wenigstens einer der Flügel des männlichen Profils (2) die Seitenwand (21) bildet und die entsprechende äußere Flügelumkehr den Umschlag (23) bildet, und der Riegel von einer Platte (21) gebildet ist, die im Inneren der Gleitschiene angeordnet ist.

5. Gleitschiene nach Anspruch 4, dadurch gekennzeichnet, daß die Platte (31) Zähne (32) auf jeder Seite aufweist und die Ausschnitte (25) und die Krampenreihen (14) auf beiden Seiten der Gleitschiene ausgebildet sind.

6. Gleitschiene nach einem der Ansprüche 1 bis 5, dadurch gekennzeichnet, daß das bewegliche Profil (2) Führungseinrichtungen (4) aufweist, um den Riegel (31) in eine Richtung senkrecht zur Gleitrichtung zu führen.

7. Gleitschiene nach Anspruch 6, dadurch gekennzeichnet, daß der Riegel (31) an einem Innenende (51) einer Stahlstange (5) befestigt ist, die in den Führungseinrichtungen (4) gleitet, wobei das äußere Ende (52) der Stange über die Gleitschiene hervorsteht.

8. Gleitschiene nach Anspruch 7, dadurch gekennzeichnet, daß sie elastische Federeinrichtungen (53) des Riegels (31) in die Verriegelungstellung und Entriegelungssteuereinrichtungen (6) aufweist, die einen Hebel (61) aufweisen, der schwenkbeweglich in Lagern (62) angebracht ist, die mit dem beweglichen Profil (2) verbunden sind und auf das äußere Ende (52) der Steuerstange (5) einwirkt.

9. Gleitschiene nach einem der Ansprüche 1 bis 8, dadurch gekennzeichnet, daß sie mehrere Riegel (31a, 31b, 31c) aufweist, die sich unabhängig voneinander bewegen können.

10. Gleitschiene nach Anspruch 9, dadurch gekennzeichnet, daß die Zähne (32) eines Riegels (31a) in Längsrichtung bezüglich jenen eines anderen Riegels (31b) um einen Abstand versetzt sind, der gleich K * p + p * (n - 1)/n ist, wobei K eine ganze Zahl, p der Abstand der Krampen und n die Anzahl der Riegel ist.

## Claims

1. Slide for motor vehicle seat including a fixed profile (1), intended to be fixed to the floor of the vehicle, and a movable profile (2), intended to be fixed to the seat and capable of sliding longitudinally with respect to the fixed profile, and locking means (3) for preventing this sliding, the fixed profile (1) including a border (13) provided with a row of locking notches (14) situated in direct proximity to a side wall (21) of the movable profile, the locking means (3) including a latch (31) connected to the movable profile (2) and displaceable, in a direction parallel to the said wall (21) and transverse to the sliding direction, between a locking position and an unlocked position, the said latch (31) being provided with teeth (32) which traverse the said side wall (21) of the movable profile by passing through respective cutouts (25) made in the said wall, the. teeth (32) being guided in the cutouts (25) during the displacements of the latch (31) and engaging, in the locking position, with notches of the said row of notches (14) of the fixed profile (1),
characterized in that the said side wall (21) includes stop means (23), situated on the sides of the said cutouts (25) and facing the border (13) of the fixed profile (1), which includes the locking notches (14) in which the ends (32a) of the teeth (32) engage, and in that the dimensions and the material of the said teeth (32) are determined so that, when there is a sliding force F exceeding a predetermined value, with the latch (31) in the locking position, the teeth (32) are able to deform by bending in the sliding direction, in the direction opposite to the direction in which the movable profile (2) is sliding, the ends (32a) of the teeth (32), thus deformed by the effect of the relative displacement of the notches (14) and the cutouts (25) through which the teeth (32) pass, being displaced to face the said stop means (23) so as to prevent any displacement of the latch (31) towards its unlocked position.

2. Slide according to Claim 1, characterized in that the stop means (23) are formed by a bend (23) of the side wall (21), in which bend the cutouts (25) extend (25a).

3. Slide according to Claim 2, characterized in that the bend (23) forms substantially a right angle (24) with the side wall (21), the border (13) of the fixed profile (1) being situated in the said angle (24), in direct proximity to the wall (21) and the bend (23), the teeth (32) of the latch (31) being situated at the level of the bend (23) in the unlocked position, and offset with respect to the bend (23) in the locking position.

4. Slide according to one of Claims 1 to 3, characterized in that the fixed profile is a female profile (1) having a generally U-shaped cross-section possessing two flanges (11) which extend by way of internal-flange foldbacks (12) bent towards the inside of the slide, and the said notches (14) are formed on. the border (13) of at least one of the said internal-flange foldbacks (12), and the movable profile is a male profile (2) likewise having a U-shaped cross-section, the flanges of which include external-flange foldbacks (22) which engage under the internal-flange foldbacks (12) of the female profile (1), at least one of the flanges of the male profile (2) constituting the said wall (21) and the corresponding external-flange foldback forming the said bend (23), and the latch consists of a plate (31) situated in the inside of the slide.

5. Slide according to Claim 4, characterized in that the plate (31) includes teeth (32) on each side, and the cutouts (25) and the rows of notches (14) are formed on both sides of the slide.

6. Slide according to any one of Claims 1 to 5, characterized in that the movable profile (2) includes guide means (4) for guiding the latch (31) in a direction perpendicular to the sliding direction.

7. Slide according to Claim 6, characterized in that the latch (31) is fixed to an inner end (51) of a control rod (5) sliding in the said guide means (4), the outer end (52) of the rod extending out of the slide.

8. Slide according to Claim 7, characterized in that it includes means (53) for the elastic return of the latch (31) into the locked position and unlocking control means (6) including a lever (61) pivotably mounted in bearings (62) secured to the movable profile (2) and acting on the outer end (52) of the control rod (5).

9. Slide according to any one of Claims 1 to 8, characterized in that it includes a plurality of latches (31a, 31b, 31c) capable of displacement independently of one another.

10. Slide according to Claim 9, characterized in that the teeth (32) of one latch (31a) are offset longitudinally with respect to those of another latch (31b) by a distance equal to K * p + p * (n - 1)/n, K being a whole number, p being the pitch of the notches and n being the number of latches.
